# EUROPEAN PATENT APPLICATION

(11) **EP 2 131 282 A1**
(43) Date of publication of application: **09.12.2009**
(21) Application number: 07740234.5
(22) Date of filing: 29.03.2007
(51) Int. Cl.: G06F 11/00

(54) **SOFTWARE MODIFICATION MANAGEMENT PROGRAM, SOFTWARE MODIFICATION MANAGEMENT DEVICE, AND SOFTWARE MODIFICATION MANAGEMENT METHOD**

(71) Applicant: Fujitsu Limited, Kawasaki-shi, Kanagawa 211-8588 (JP)
(72) Inventor: HORI, Hideaki, Kawasaki-shi Kanagawa 211-8588 (JP)
(74) Representative: Stebbing, Timothy Charles
(86) International application number: PCT/JP2007/056796
(87) International publication number: WO 2008/126221

(57) **Abstract**

A cluster system for executing jobs with high processing load is allowed to continue its service while software modification is applied to the system.

When input with modification data (3), a modification application scheduled node decision means (1b) generates a modification application scheduled node list (1c). A modification applicable node selection means (1e) successively extracts the node IDs of nodes which are not executing a job, from the modification application scheduled node list to set the extracted node IDs as modification applicable node IDs until the value of a modification-in-progress node counter (1f) indicating the number of nodes to which software modification is being applied reaches a predetermined upper limit value. A service management means (1g) stops the service of nodes corresponding to the modification applicable node IDs. In accordance with the modification data, a modification means (1h) modifies target software installed on the nodes whose service has been stopped.

## Description

### Technical Field

The present invention relates to software modification management programs, apparatus and methods for managing application of modifications to software installed on a plurality of nodes constituting a cluster system, and more particularly, to a software modification management program, apparatus and method whereby modifications can be applied to software while continuing the service of a cluster system.

### Background Art

In universities and research departments of business enterprises, cluster systems are used as computer systems for executing parallel computation programs. A cluster system comprises a large number of computers interconnected by a network to execute jobs (computation programs). A program to be executed is submitted as a batch job by a user.

The cluster system occasionally requires updating of part of the OS or application software installed on the individual computers constituting the cluster. In such cases, generally, the service of the whole system is stopped. Subsequently, the administrator of the system checks the version numbers of the software installed on the individual computers to identify those computers which are to be updated. The administrator then manipulates, through a management terminal device, individual target computers to be updated, to update the software installed on these computers.

If the service of the system is stopped in order to update the software, however, the operational efficiency of the system lowers.

Accordingly, techniques have been under study which permit software to be updated without stopping the system. For example, a technique has been known wherein a patch application scheduled time is set for each of computers constituting a cluster such that the scheduled times do not coincide with one another, and patch processing is carried out according to the schedule specified by the patch application scheduled times (cf. Patent Document 1).
Patent Document 1: Japanese Laid-open Patent Publication No. 2003-15894

### Disclosure of the Invention

### Problems to be Solved by the Invention

The technique of Patent Document 1, however, does not assume the application to a cluster system which is used to perform computations (e.g., scientific and engineering computations) requiring a long time to execute jobs. Namely, Patent Document 1 discloses a technique of applying a patch according to the predetermined schedule without regard to the job execution status. Because of this, at the scheduled time, the execution of an application program by the computer to which the patch is to be applied is stopped regardless of whether a job is being executed by the computer (see paragraph [0043] of Patent Document 1). Thus, the technique disclosed in Patent Document 1 is applicable to a cluster system for use in Web searching, for example, which is expected to be input with a vast number of processing requests but each processing request can be executed in a short time.

On the other hand, where the cluster system is used to execute jobs requiring a long time for execution (jobs with high processing load), such as scientific and engineering computations, it is unpractical to stop the service of nodes without regard to the job execution status. Moreover, jobs with especially high processing load are often executed as parallel jobs, which are processed cooperatively by multiple nodes. If one or more of the multiple nodes executing a parallel job are stopped in the middle of the job execution with a view to updating software, then the processing of the entire parallel job stops, with the result that the operational efficiency lowers.

Thus, the cluster system used to execute jobs with high processing load does not allow maintenance to be performed while a job is under execution, or the job being executed needs to be forcedly terminated to perform maintenance. Furthermore, in the case of a parallel job, it is necessary that the operation environment of individual nodes that execute a parallel job should be the same. Conventionally, however, whether software modification has been applied or not is not taken into account when allocating jobs. Accordingly, in a situation where nodes applied with software modification and nodes not applied with software modification coexist, it is not possible to put the system into service. As a result, the system has to be left out of service until the maintenance of all nodes is finished, which lowers the operational efficiency.

The present invention was created in view of the above circumstances, and an object thereof is to provide a software modification management program, apparatus and method used in conjunction with a cluster system for executing jobs with high processing load and yet capable of applying modifications to software while permitting the system to continue its service.

### Means for Solving the Problems

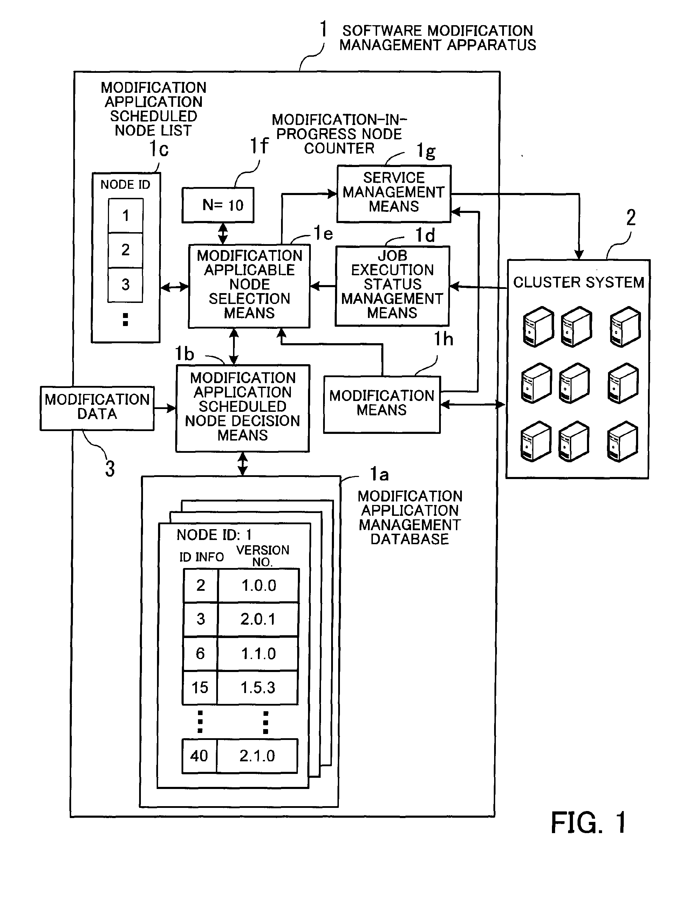

To solve the above problems, the present invention provides a software modification management program as illustrated in FIG. 1. In order to manage modification application to software installed on a plurality of nodes constituting a cluster system, the software modification management program according to the invention can cause a computer to perform functions illustrated in FIG. 1.

A modification application management database 1a has registered therein identification information and version numbers of the software installed on the respective nodes in such a manner that registered items are associated with node IDs of the corresponding nodes. When input with modification data 3 including identification information and version number of target software to be modified and a modification program, a modification application scheduled node decision means 1b searches the modification application management database 1a by the input identification information and version number of the target software, extracts node IDs of modification application scheduled nodes on which an older version of the target software is installed, and generates a modification application scheduled node list 1c including the extracted node IDs. A job execution status management means 1d manages information indicating whether the individual nodes are executing a job or not. A modification applicable node selection means 1e acquires, from the job execution status management means 1d, the node IDs of non-executing nodes which are not executing a job, successively extracts the node IDs of the non-executing nodes from the modification application scheduled node list 1c to set the extracted node IDs as modification applicable node IDs until a value of a modification-in-progress node counter 1f indicating a number of modification-in-progress nodes to which software modification is being applied reaches a predetermined upper limit value, and increments the value of the modification-in-progress node counter 1f each time a node ID is extracted from the modification application scheduled node list 1c. When the modification application to modification applicable nodes corresponding to the modification applicable node IDs is completed, the modification applicable node selection means 1e deletes the node IDs of modification-applied nodes with respect to which the modification application is completed, from the modification application scheduled node list 1c, and subtracts a number of the modification-applied nodes from the value of the modification-in-progress node counter 1f. A service management means 1g stops service of the modification applicable nodes corresponding to the modification applicable node IDs and, on receiving the node IDs of the modification-applied nodes, starts the service of the nodes corresponding to the received node IDs. A modification means 1h modifies the target software installed on the modification applicable nodes of which the service has been stopped, in accordance with the modification data, and notifies the modification applicable node selection means 1e and the service management means 1g of the node IDs of the modification-applied nodes.

The software modification management program is executed by a computer, whereby, when input with the modification data 3, the modification application scheduled node decision means 1b searches the modification application management database 1a by the input identification information and version number of the target software to be modified, then extracts the node IDs of the modification application scheduled nodes on which an older version of the target software is installed, and generates a modification application scheduled node list 1c including the extracted node IDs. Further, the modification applicable node selection means 1e acquires, from the job execution status management means 1d, the node IDs of non-executing nodes which are not executing a job, successively extracts the node IDs of the non-executing nodes from the modification application scheduled node list 1c to set the extracted node IDs as the modification applicable node IDs until the value of the modification-in-progress node counter 1f indicating the number of modification-in-progress nodes to which software modification is being applied reaches the predetermined upper limit value, and increments the value of the modification-in-progress node counter 1f each time a node ID is extracted from the modification application scheduled node list 1c. Subsequently, the service management means 1g stops the service of the modification applicable nodes corresponding to the modification applicable node IDs. The modification means 1h then modifies the target software installed on the modification applicable nodes of which the service has been stopped, in accordance with the modification data, and notifies the modification applicable node selection means 1e and the service management means 1g of the node IDs of modification-applied nodes with respect to which the modification application is completed. On completion of the modification application to the modification applicable nodes corresponding to the modification applicable node IDs, the modification applicable node selection means 1e deletes the node IDs of the modification-applied nodes from the modification application scheduled node list 1c, and subtracts the number of the modification-applied nodes from the value of the modification-in-progress node counter 1f. Subsequently, the service management means 1g starts the service of the modification-applied nodes.

### Advantageous Effects of the Invention

In the present invention, software modification is applied in order according to the job execution status such that the software modification is applied preferentially to nodes which are not executing a job, whereby the software can be updated while continuing the service of the cluster system.

The above and other objects, features and advantages of the present invention will become apparent from the following description when taken in conjunction with the accompanying drawings which illustrate preferred embodiments of the present invention by way of example.

### Brief Description of the Drawings

FIG. 1 illustrates a general concept of the invention;
FIG. 2 illustrates an exemplary system configuration of an embodiment;
FIG. 3 illustrates an exemplary hardware configuration of a management server used in the embodiment;
FIG. 4 is a block diagram illustrating functions of the management server and nodes;
FIG. 5 illustrates an exemplary data structure of a software name management database;
FIG. 6 illustrates an exemplary data structure of a modification application management database;
FIG. 7 illustrates an exemplary data structure of an application status management database;
FIG. 8 illustrates a process at an initiation stage of modification application;
FIG. 9 illustrates an exemplary data structure of modification data;
FIG. 10 is a flowchart illustrating a procedure for the initiation stage of the modification application process;
FIG. 11 is a flowchart illustrating a procedure of a modification applicability determination process;
FIG. 12 is a flowchart illustrating a procedure of a modification applicable node selection and notification process;
FIG. 13 illustrates the manner of how modification applicable nodes are selected;
FIG. 14 illustrates an incorporation process following the modification application;
FIG. 15 is a flowchart illustrating the incorporation process following the modification application;
FIG. 16 illustrates the manner of how the application status management database is updated when nodes are incorporated;
FIG. 17 illustrates a job submission process executed while the modification application process is continued;
FIG. 18 illustrates the manner of how the modification application process is executed the second and subsequent times;
FIG. 19 illustrates the manner of how modification applicable nodes are selected the second time; and
FIG. 20 illustrates the manner of how a parallel job is allocated.

### Best Mode of Carrying out the Invention

Embodiments of the present invention will be described below with reference to the accompanying drawings.

FIG. 1 illustrates a general concept of the invention. In order to modify software installed on nodes constituting a cluster system 2, a software modification management apparatus 1 comprises a modification application management database 1a, a modification application scheduled node decision means 1b, a job execution status management means 1d, a modification applicable node selection means 1e, a service management means 1g, and a modification means 1h.

The modification application management database 1a has registered therein the identification information and version numbers of software installed on the individual nodes in such a manner that the registered items are associated with the node IDs of the corresponding nodes.

When input with modification data 3 including the identification information and version number of target software to be modified and a modification program, the modification application scheduled node decision means 1b searches the modification application management database 1a by the input identification information and version number of the target software. Then, the modification application scheduled node decision means 1b extracts the node IDs of those nodes on which an older version of the target software is installed, and generates a modification application scheduled node list 1c including the extracted node IDs.

The job execution status management means 1d manages information indicating whether the individual nodes are executing a job or not. For example, when the execution of a job is started in a node, the job execution status management means 1d acquires, from this node, information indicating the start of the job. Also, when the execution of a job by a node is terminated, the job execution status management means 1d acquires, from this node, information indicating the termination of the job. The job execution status management means 1d stores the status of the individual nodes (indicating whether a job is being executed or not) in association with the respective node IDs.

The modification applicable node selection means 1e acquires, from the job execution status management means 1d, the node IDs of non-executing nodes which are not executing a job. Then, the modification applicable node selection means 1e successively extracts the node IDs of the non-executing nodes from the modification application scheduled node list 1c to set the extracted node IDs as modification applicable node IDs until the value of a modification-in-progress node counter 1f, which indicates the number of nodes to which software modification is being applied, reaches a predetermined upper limit value. In this case, each time a node ID is extracted from the modification application scheduled node list 1c, the modification applicable node selection means 1e increments the value of the modification-in-progress node counter 1f.

Also, when modification application to modification applicable nodes corresponding to the modification applicable node IDs is completed, the modification applicable node selection means 1e deletes the node IDs of modification-applied nodes with respect to which the modification application is completed, from the modification application scheduled node list 1c. At this time, the modification applicable node selection means 1e subtracts the number of the modification-applied nodes from the value of the modification-in-progress node counter 1f.

The service management means 1g stops the service of the modification applicable nodes corresponding to the modification applicable node IDs. Also, on receiving the node IDs of the modification-applied nodes, the service management means 1g starts the service of the nodes corresponding to the received node IDs.

In accordance with the modification data 3, the modification means 1h modifies the target software installed on the modification applicable nodes of which the service has been stopped. Then, the modification means 1h notifies the modification applicable node selection means 1e and the service management means 1g of the node IDs of the modification-applied nodes.

With the software modification management apparatus configured as described above, when the modification data 3 is input, the modification application scheduled node decision means 1b searches the modification application management database 1a by the input identification information and version number of target software to be modified, then extracts the node IDs of those nodes on which an older version of the target software is installed, and generates a modification application scheduled node list 1c including the extracted node IDs. Further, the modification applicable node selection means 1e acquires, from the job execution status management means 1d, the node IDs of non-executing nodes which are not executing a job. Then, the modification applicable node selection means 1e successively extracts, as the modification applicable node IDs, the node IDs of the non-executing nodes from the modification application scheduled node list until the value of the modification-in-process counter 1f, which indicates the number of nodes to which software modification is being applied, reaches the predetermined upper limit value. Also, each time a node ID is extracted from the modification application scheduled node list, the modification applicable node selection means 1e increments the value of the modification-in-progress node counter 1f.

Subsequently, the service management means 1g stops the service of the modification applicable nodes corresponding to the modification applicable node IDs. The modification means 1h then modifies the target software installed on the modification applicable nodes of which the service has been stopped, in accordance with the modification data, and notifies the modification applicable node selection means 1e and the service management means 1g of the node IDs of modification-applied nodes. On completion of the modification application to the modification applicable nodes corresponding to the modification applicable node IDs, the modification applicable node selection means 1e deletes the node IDs of the modification-applied nodes from the modification application scheduled node list 1c and also subtracts the number of the modification-applied nodes from the value of the modification-in-progress node counter 1f. Then, the service management means 1g starts the service of the modification-applied nodes.

After that, the modification applicable node selection means 1e acquires, from the modification application scheduled node list 1c, the node IDs of non-executing nodes corresponding to the number by which the value of the modification-in-progress node counter 1f has been decreased, and sets the acquired node IDs as indicative of the modification applicable nodes. The service management means 1g then stops the service of the modification applicable nodes, and the modification means 1h applies the modification to the modification applicable nodes in accordance with the modification data 3.

Thus, the software modification is applied preferentially to those nodes which are not executing a job, whereby the software can be updated while continuing the service of the cluster system.

An embodiment will be now described in detail.

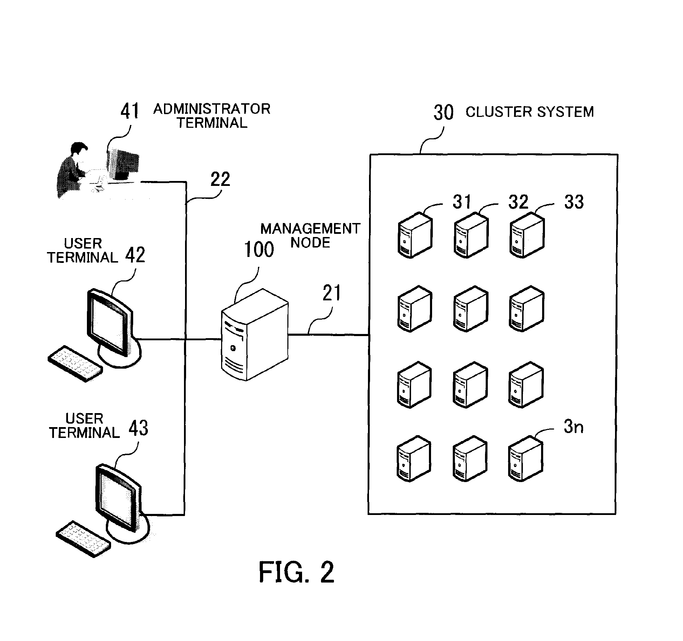

FIG. 2 illustrates an exemplary system configuration of the embodiment. In this embodiment, a cluster system 30 is managed by a management node 100. The cluster system 30 is constituted by a plurality of nodes 31, 32, 33, ..., 3n and executes jobs submitted thereto. The nodes 31, 32, 33, ..., 3n each comprise a computer for executing a job.

The management node 100 is connected via a management network 21 to the individual nodes 31, 32, 33, ..., 3n of the cluster system 30. The management node 100 manages the entire cluster system 30. Specifically, the management node 100 instructs the cluster system 30 to execute jobs and also adds/removes nodes to/from a serviceable node group.

The serviceable node group represents a set of nodes that are able to execute a job at the request of the management node 100. The addition of a node indicates a process whereby a computer connected to the cluster system 30 is made to begin operating as a node of the cluster system 30. On the other hand, the removal of a node indicates a process whereby the service of a computer which has been functioning as a node of the cluster system 30 to execute a job until then is stopped.

Further, at the request of an administrator terminal 41, the management node 100 performs a software modification application process, such as patch processing, on the individual nodes 31, 32, 33, ..., 3n of the cluster system 30.

The management node 100 is also connected with the administrator terminal 41 and user terminals 42 and 43 via a network 22. The administrator terminal 41 is a computer used by an administrator who is responsible for the management of the entire system. Software modification application instructions for the nodes 31, 32, 33, ..., 3n are input to the management node 100 with the use of the administrator terminal 41.

The user terminals 42 and 43 are computers used by users who make a request for the execution of a job. When the execution of a job is requested by a user through the user terminal 42 or 43, the entered execution request is sent to the management node 100.

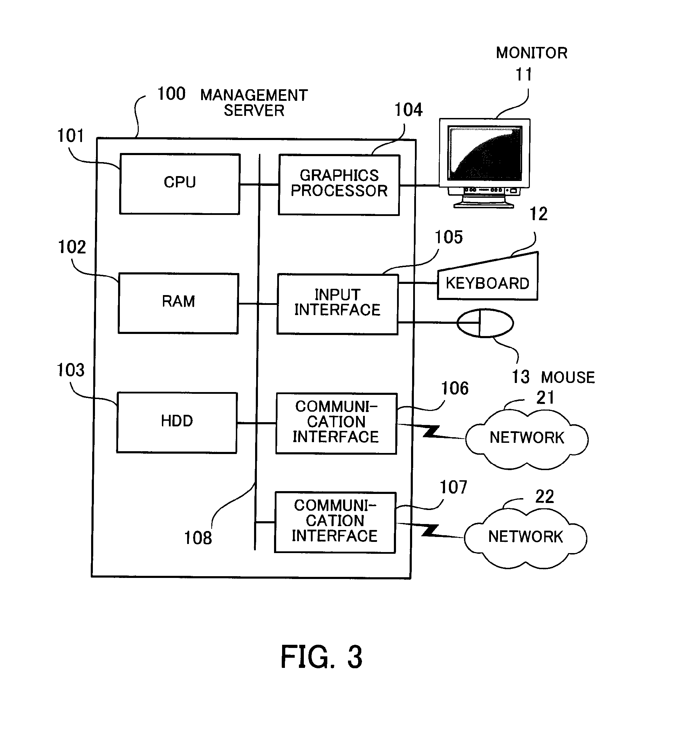

FIG. 3 illustrates an exemplary hardware configuration of a management server used in the embodiment. The management server 100 operates under the control of a CPU (Central Processing Unit) 101. The CPU 101 is connected via a bus 108 with a RAM (Random Access Memory) 102, a hard disk drive (HDD) 103, a graphics processor 104, an input interface 105, and communication interfaces 106 and 107.

The RAM 102 temporarily stores at least part of an OS (Operating System) and application program executed by the CPU 101. Also, the RAM 102 stores various data necessary for the process of the CPU 101. The HDD 103 stores the OS and application programs.

The graphics processor 104 is connected with a monitor 11. In accordance with instructions from the CPU 101, the graphics processor 104 displays images on the screen of the monitor 11. The input interface 105 is connected with a keyboard 12 and a mouse 13, and sends signals from the keyboard 12 and the mouse 13 to the CPU 101 via the bus 108.

The communication interface 106 is connected to the network 21 and transmits/receives data to/from the individual nodes 31, 32, 33, ..., 3n of the cluster system 30 through the network 21.

The communication interface 107 is connected to the network 22 and transmits/receives data to/from the administrator terminal 41 and the user terminals 42 and 43 through the network 22.

With the hardware configuration described above, the processing function of this embodiment can be accomplished. Although FIG. 3 illustrates the hardware configuration of the management server 100, the nodes 31, 32, 33, ..., 3n of the cluster system 30, the administrator terminal 41 and the user terminals 42 and 43 may each have a similar hardware configuration.

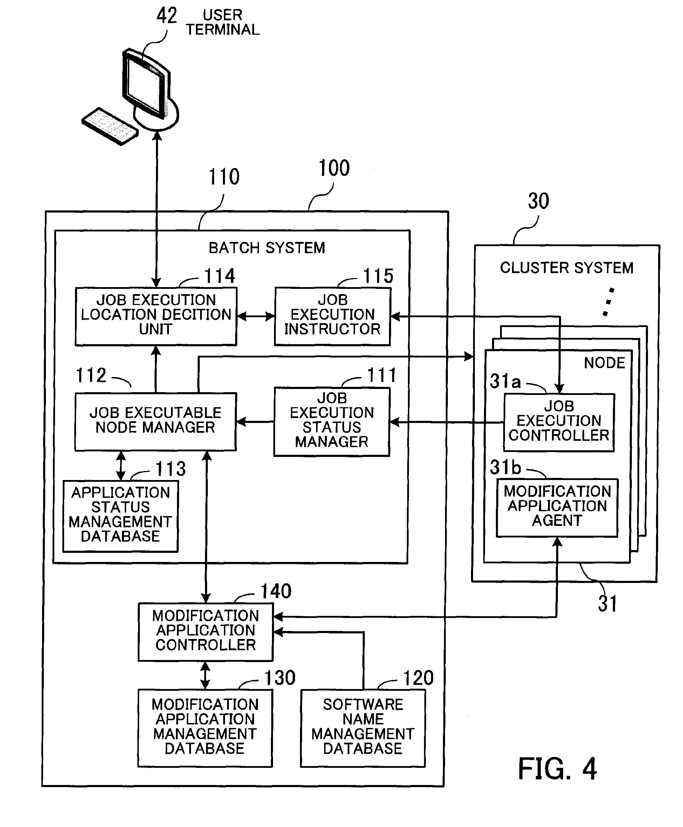

FIG. 4 is a block diagram illustrating the functions of the management server and nodes. The management server 100 comprises a batch system 110, a software name management database 120, a modification application management database 130, and a modification application controller 140.

The batch system 110 causes the cluster system 30 to execute a job requested by the user terminal 42, 43. To this end, the batch system 110 includes a job execution status manager 111, a job executable node manager 112, an application status management database 113, a job execution location decision unit 114, and a job execution instructor 115.

The job execution status manager 111 manages information indicating which node is executing a job. Specifically, on acquiring information about the start of execution of a job from a node which has started executing the job, the job execution status manager 111 stores identification information (job ID) identifying the job under execution and identification information (node ID) identifying the node executing the job such that the former information is associated with the latter information. Then, when the job execution result is returned from the node, the job execution status manager 111 recognizes that the execution of the job has been completed, and stores, as an idle node, the node ID that has been associated with the job ID of the completed job.

The job executable node manager 112 acquires the job execution status of the individual nodes from the job execution status manager 111 and identifies nodes that can execute a job. During a software update application process, whether the individual nodes can execute a job or not is determined also taking account of the status of modification application. Specifically, during the software modification application process, the job executable node manager 112 acquires a modification application scheduled node list (node IDs of those nodes to which software modification needs to be applied) from the modification application controller 140. Then, the job executable node manager 112 stores the modification application scheduled node list in the application status management database 113 and manages the list. Further, when requested from the job execution location decision unit 114, the job executable node manager 112 provides the job execution location decision unit with a list of node IDs indicating job executable nodes.

The functions of the modification applicable node selection means 1e and service management means 1g, both appearing in FIG. 1, are incorporated into the job executable node manager 112.

The application status management database 113 is a database holding information about the status of application of a modification program during the software modification application process. Part of the storage area in the RAM 102, for example, is used as the application status management database 113.

In response to a job execution request from the user terminal 42 or 43, the job execution location decision unit 114 determines a node or nodes as a job execution location. Specifically, on receiving a job execution request, the job execution location decision unit 114 acquires, from the job executable node manager 112, a list of nodes which can execute a job at this point of time. Subsequently, the job execution location decision unit 114 selects a number of nodes necessary to execute the job, from among the job executable nodes, and determines the selected nodes as the execution location. The job execution location decision unit 114 then notifies the job execution instructor 115 of the node IDs of the nodes which have been determined as the execution location, together with the contents of the job to be executed (e.g., information identifying a program to be run to execute the job, variables, etc.).

When the node IDs and the contents of the job to be executed are received from the job execution location decision unit 114, the job execution instructor 115 instructs the nodes corresponding to the received node IDs to execute the job. Also, when the job execution results are received from the nodes which have finished executing the job, the job execution instructor 115 sends the execution results to the user terminal 42 or 43.

The software name management database 120 is a database for managing the names and version numbers of software installed on the individual nodes 31, 32, 33, ..., 3n in the cluster system 30. Part of the storage area of the HDD 103, for example, is used as the software name management database 120.

The modification application management database 130 is a database for managing the modification application status of the individual nodes. Part of the storage area of the HDD 103, for example, is used as the modification application management database 130.

In response to a software update request from the administrator terminal 41, the modification application controller 140 performs software updating (modification application process) on individual nodes on which applicable software is installed. The modification application controller 140 carries out the modification application process on a predetermined number of nodes at a time, without stopping the service of the cluster system 30. Also, when requested from the administrator terminal 41, the modification application controller 140 sends the contents of the modification application management database to the administrator terminal 41. This enables the administrator using the administrator terminal 41 to monitor the progress of the modification application process whenever necessary.

The functions of the modification application scheduled node decision means 1b and modification means 1h, both appearing in FIG. 1, are incorporated into the modification application controller 140.

The node 31 constituting the cluster system 30 includes a job execution controller 31a and a modification application agent 31b.

On receiving a job execution instruction from the management server 100, the job execution controller 31a starts a program applicable to the job and then executes the job. At this time, the job execution controller 31a notifies the job execution status manager 111 in the management server 100 that the execution of the job has been started. When the execution of the job is completed, the job execution controller 31a sends the job execution result to the management server 100. At this time, the job execution controller 31a notifies the job execution status manager 111 in the management server 100 that the execution of the job has been completed.

The modification application agent 31b performs the modification application process in accordance with a software modification application instruction from the management server 100. Specifically, on receiving modification data from the management server 100, the modification application agent 31b identifies target software to be modified, by the header information of the modification data. Then, the modification application agent updates the target software by embedding, in the software, the modification program included in the modification data. Also, when the modification application to the software is completed, the modification application agent 31b notifies the management server 100 of the completion of the modification application.

The contents of the databases illustrated in FIG. 4 will be now explained in detail.

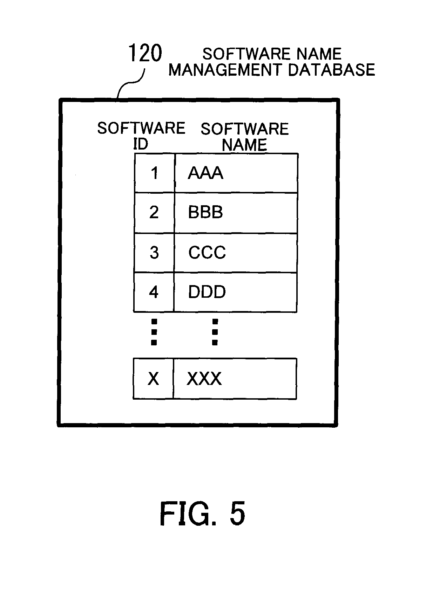

FIG. 5 illustrates an exemplary data structure of the software name management database. The software name management database 120 has columns "software ID" and "software name". The "software ID" column holds identification information (software ID) uniquely identifying software installed on at least one of the nodes. The "software name" column holds the names of software installed on at least one of the nodes in such a manner that the software names are associated with the respective software IDs.

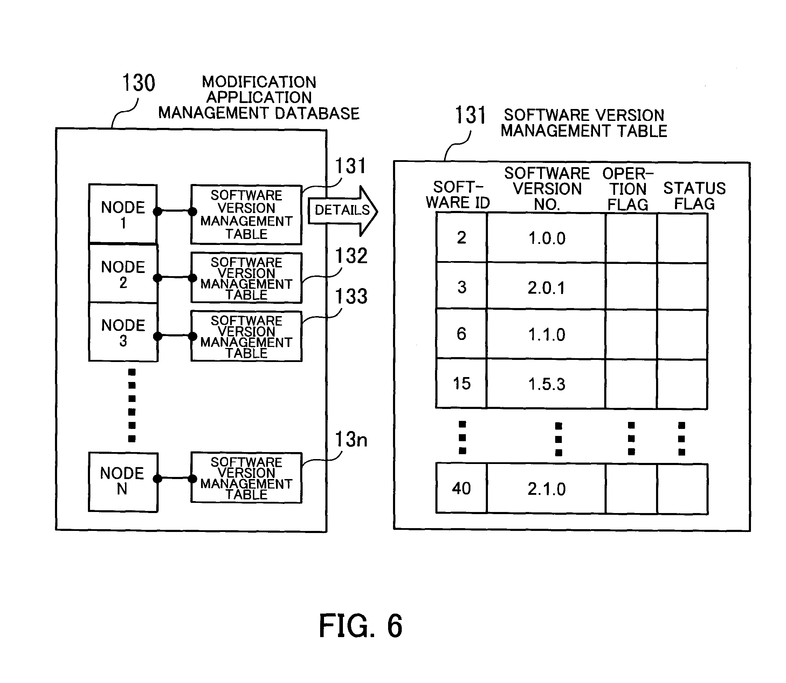

FIG. 6 illustrates an exemplary data structure of the modification application management database. The modification application management database 130 holds software version management tables 131, 132, 133, ..., 13n in association with the node numbers of the respective nodes 31, 32, 33, ..., 3n. The software version management tables 131, 132, 133, ..., 13n are each a data table for managing the software installed on the corresponding node.

The software version management table 131 has columns "software ID", "software version number", "operation flag", and "status flag". The "software ID" column holds the software IDs of software installed on the node 31 with which the software version management table 131 is associated. The "software version number" column holds the version numbers of the software installed on the node 31 with which the software version management table 131 is associated in such a manner that the version numbers are associated with the respective software IDs.

In the "operation flag" column is set a flag (operation flag) indicating a process to be performed on the corresponding software of the node 31. The operation flag is used only while the software is updated, and indicates what is to be performed on the corresponding software during the software updating. The operation flag has an "update" state and an "unalterable" state. The "update" state of the operation flag indicates that the modification application process is to be executed on the corresponding software. The "unalterable" state of the operation flag indicates that the modification application process is not to be executed on the corresponding software.

In the "status flag" column, a flag (status flag) indicative of the progress of software updating is set. The status flag is used only while the software is updated, and indicates whether or not the software updating has been completed. The status flag has a "done" state, an "ongoing" state, and a "not-yet" state. The "done" state of the status flag indicates that the software updating has been completed. Where the operation flag is in the "unalterable" state, the status flag is set to the "done" state. The "ongoing" state of the status flag indicates that the software updating is in progress. The "not-yet" state of the status flag indicates that the software updating is not initiated yet.

Thus, by looking up the modification application management database 130, it possible to ascertain the version numbers of all pieces of software installed on all nodes.

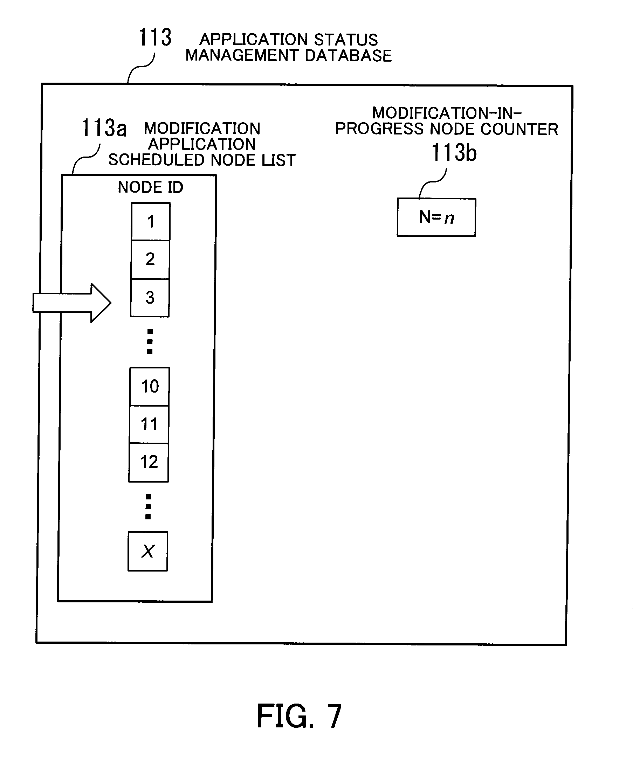

FIG. 7 illustrates an exemplary data structure of the application status management database. The application status management database 113 includes a modification application scheduled node list 113a and a modification-in-progress node counter 113b.

When modification is applied to certain software, the node IDs of target nodes to which the modification is to be applied are stored in the modification application scheduled node list 113a. The list of the node IDs of target nodes is sent from the modification application controller 140 to the job executable node manager 112, which then registers the list in the application status management database 113 as the modification application scheduled node list 113a.

The modification-in-progress node counter 113b is a counter indicating the number of nodes on which the modification application process is currently performed. With the modification-in-progress node counter 113b, it is possible to restrict the number of nodes to which the modification is concurrently applied, so as not to exceed a predetermined number. Suppose that "10", for example, is set as the upper limit for the number of nodes on which the modification application process is concurrently performed. In this case, if the value of the modification-in-progress node counter 113b reaches "10", the modification application process for the remaining nodes is initiated at a later time.

It is necessary to set the upper limit for the number of nodes on which the modification application process is concurrently performed in order that the modification application may be executed while permitting the system to provide its service. Namely, if no restriction is placed on the number of nodes, then the modification application process is performed concurrently on all idle nodes. While the modification application is in progress, therefore, new jobs fail to be executed. Thus, to perform the modification application process concurrently on all idle nodes means temporarily stopping the service. Moreover, where the modification application process is concurrently carried out on all idle nodes, the management network 21 is temporarily applied with an excessively high load, also entailing lowering in the efficiency of the modification application process.

Accordingly, the administrator determines in advance an upper limit for the number of nodes on which the modification application process is concurrently executed, taking account of the urgency of the modification application, the operational efficiency of the system and the scale of the overall system, and sets the determined upper limit in the job executable node manager 112. The upper limit value is held in the memory area managed by the job executable node manager 112.

With the system described above, the software modification application process is performed while permitting the cluster system 30 to provide its service.

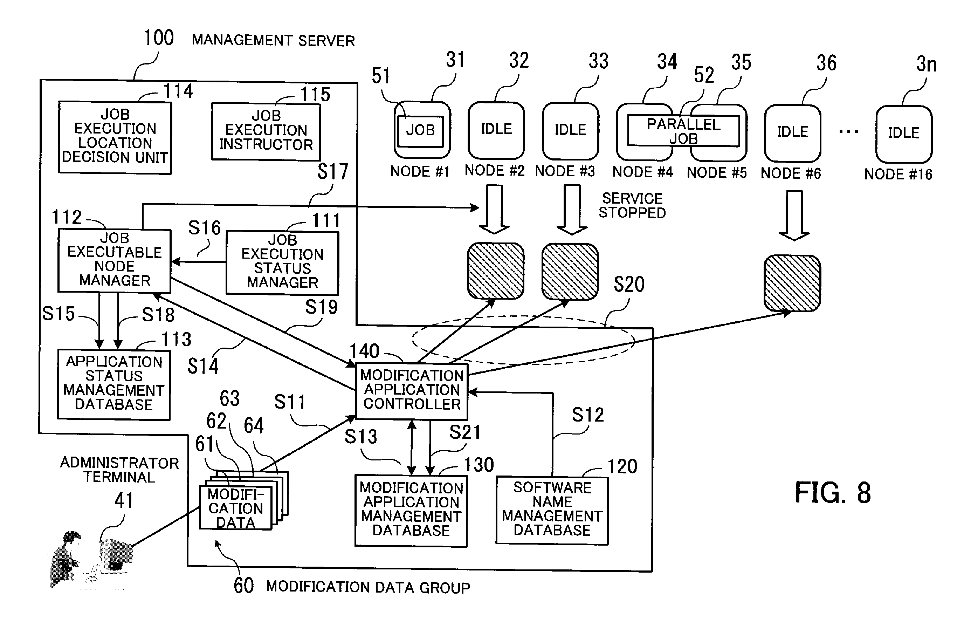

FIG. 8 illustrates a process at an initiation stage of the modification application. In the illustrated example, it is assumed that the nodes 31 to 3n constituting the cluster system 30 are 16 in number. Also, a job 51 is being executed by the node 31, and a parallel job 52 is being executed by the nodes 34 and 35. Where the modification application process is performed in such a situation, first, a modification data group 60 including multiple items of modification data 61 to 64 is input to the modification application controller 140 from the administrator terminal 41, and a modification application instruction is output from the administrator terminal (Step S11). Thereupon, the modification application controller 140 looks up the software name management database 120 and acquires the software IDs of target software to be modified (Step S12).

Further, the modification application controller 140 looks up the modification application management database 130 and, using the software IDs of the target software, acquires the node IDs of nodes on which the target software is installed (Step S13). At this time, the modification application controller 140 sets "update" for the operation flag corresponding to the software ID with respect to which the modification is to be applied, and sets "unalterable" for the operation flag corresponding to the software ID with respect to which the modification is not to be applied. Also, the modification application controller 140 sets "not-yet" for the status flag corresponding to the software ID with respect to which the modification is to be applied.

Subsequently, the modification application controller 140 sends the modification application scheduled node list to the job executable node manager 112 (Step S14).

On receiving the modification application scheduled node list, the job executable node manager 112 stores the modification application scheduled node list in the application status management database 113 (Step S15). Also, the job executable node manager 112 acquires, from the job execution status manager 111, the job execution status of the individual nodes included in the modification application scheduled node list (Step S16). In the illustrated example, the nodes 31, 34 and 35 are found to be executing a job. Then, the job executable node manager 112 selects a number of idle nodes which are included in the modification application scheduled node list and which do not exceed the concurrently executable upper limit value, and stops the service of the selected nodes (Step S17). In the example of FIG. 8, the service of the nodes 32, 33 and 36 is stopped. Subsequently, the job executable node manager 112 notifies the modification application controller 140 of the node IDs of the nodes of which the service has been stopped (Step S19).

The modification application controller 140 sends the modification data group 60 to the stopped nodes 32, 33 and 36, and instructs the nodes to apply the modifications to their software (Step S20). Also, the modification application controller 140 accesses the software version management tables stored in the modification application management database 130 and corresponding to the respective nodes on which the modification application process is currently performed, to set the status flags associated with the target software to "ongoing" (indicating that the modification application is in progress) (Step S21).

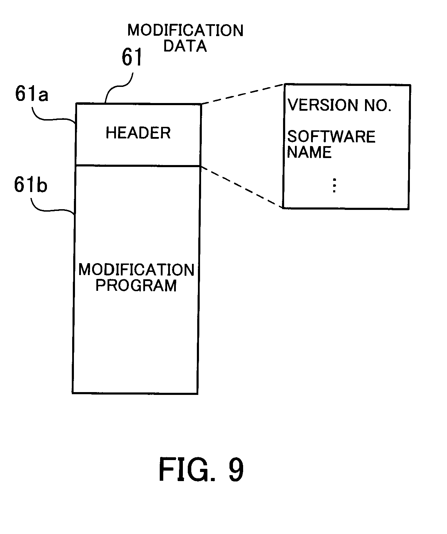

FIG. 9 illustrates an exemplary data structure of the modification data. The modification data 61 includes a header 61a, and a modification program 61b or the like. The header 61a contains information about the version number of the modification program, the software name and the like. The example illustrated in FIG. 9 is based on the assumption that the target software is modified by means of the modification program 61b. Where the target software is updated by replacing files such as libraries, definition files or the like, such files are included in the modification data.

The process illustrated in FIG. 8 will be now described in further detail.

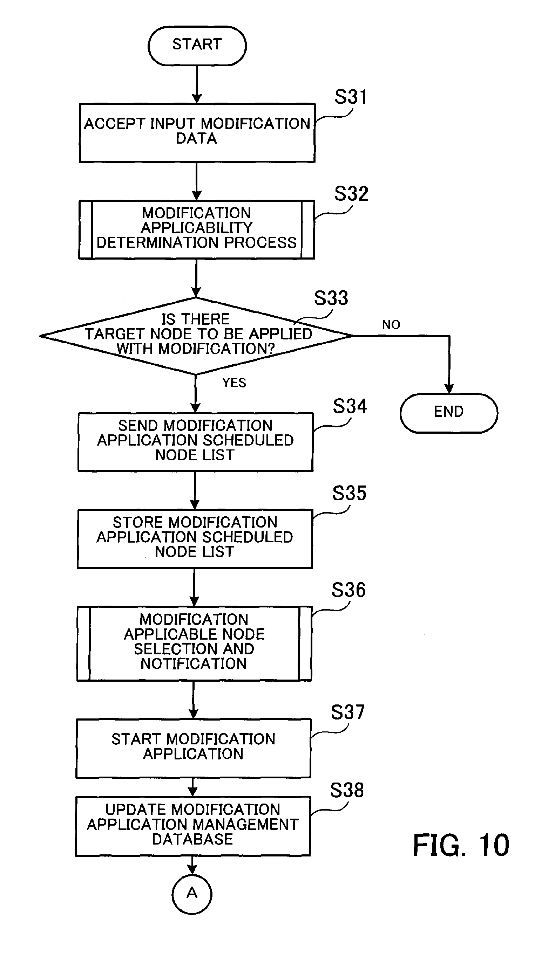

FIG. 10 is a flowchart illustrating a procedure for the initiation stage of the modification application process. In the following, the process illustrated in FIG. 10 will be explained in order of step number.

Step S31: The administrator inputs a software modification instruction to the administrator terminal 41. It is assumed that, at this time, the multiple items of modification data 61 to 64 for modifying software are already stored in the HDD of the administrator terminal 41. In response to the administrator's manipulated input, the administrator terminal 41 sends a modification application instruction including the modification data group 60 to the management server 100. At the management server 100, the modification application controller 140 accepts the modification application instruction sent from the administrator terminal 41.

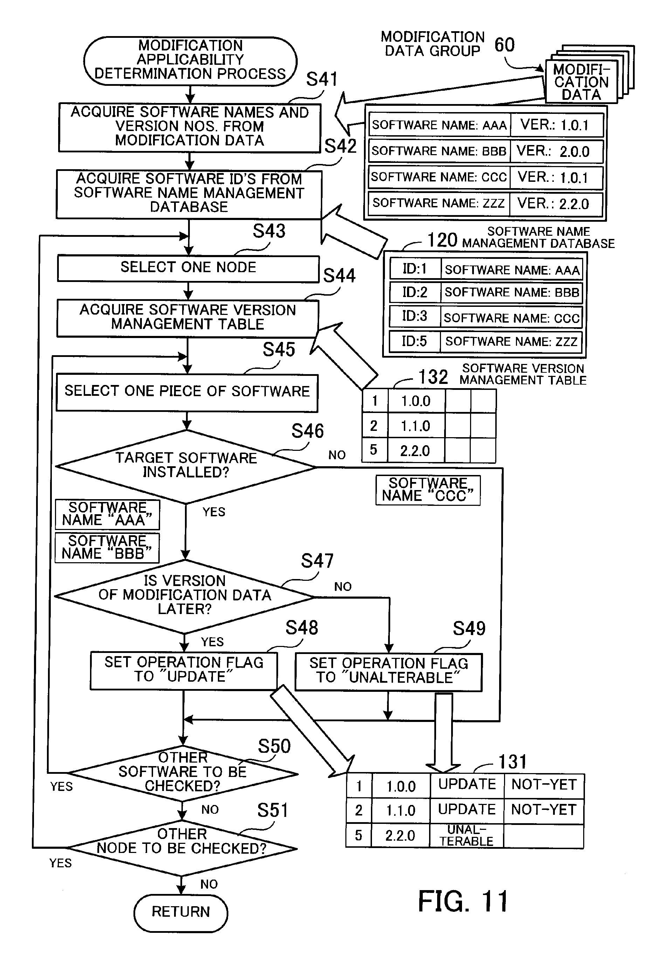

Step S32: The modification application controller 140 determines the modification applicability with respect to each of the nodes 31, 32, ..., 3n constituting the cluster system 30. Details of this process will be explained later (cf. FIG. 11).

Step S33: Based on the result of the decision in Step S32, the modification application controller 140 determines whether or not there is a target node or nodes to which the modification needs to be applied. If such a node or nodes exist, the process proceeds to Step S34. If there is no such node, the process ends.

Step S34: The modification application controller 140 sends a modification application scheduled node list to the job executable node manager 112.

Step S35: The job executable node manager 112 receives the modification application scheduled node list and stores the list in the application status management database 113 as the modification application scheduled node list.

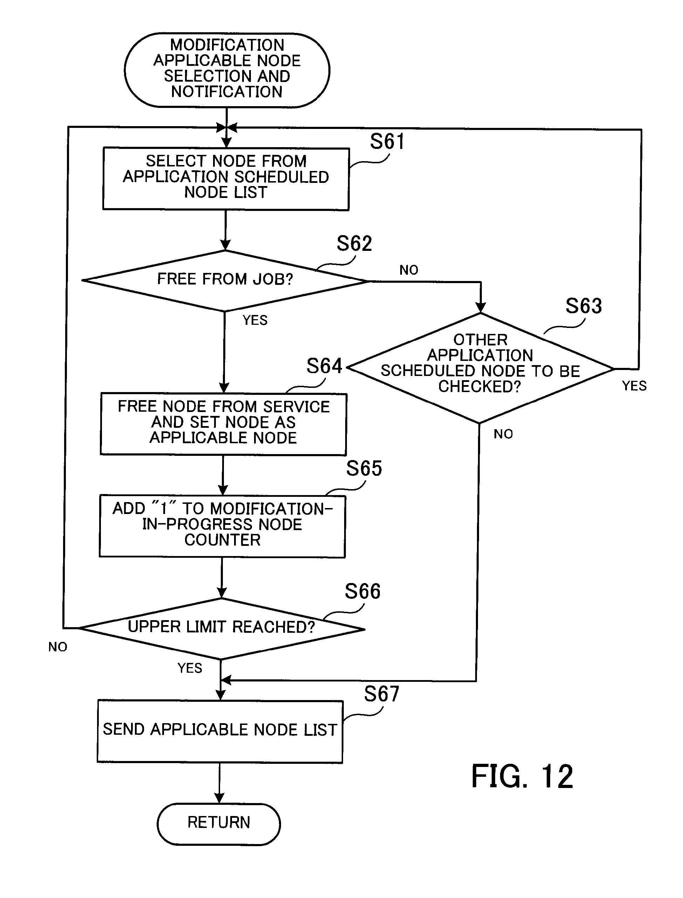

Step S36: The job executable node manager 112 selects modification applicable nodes and notifies the modification application controller 140 of the result of the selection. Details of this process will be explained later (cf. FIG. 12).

Step S37: The modification application controller 140 starts to apply the modification data 61 to the nodes specified as the modification applicable nodes.

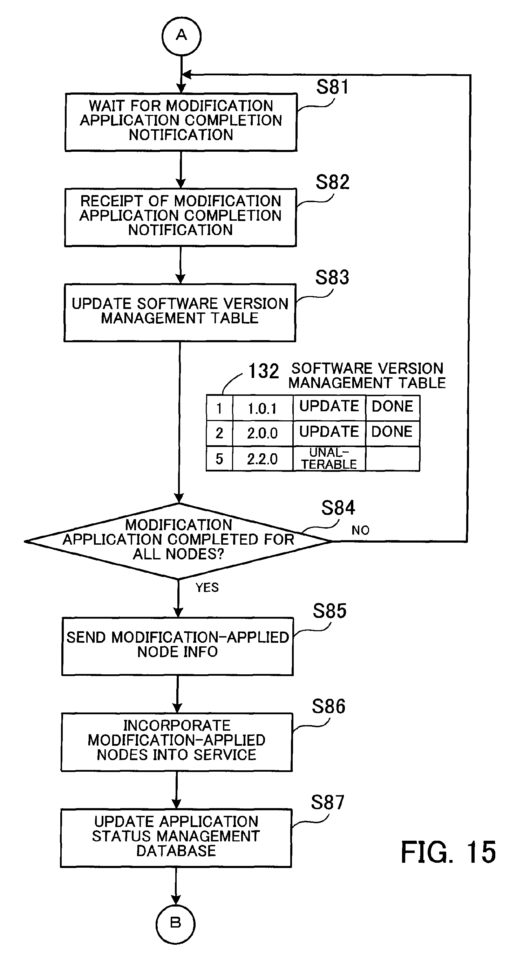

Step S38: The modification application controller 140 updates the modification application management database 130. Specifically, the modification application controller 140 accesses the software version management tables stored in the modification application management database 130 and corresponding to the modification applicable nodes, and sets the status flags associated with the software ID of the target software to "ongoing" (indicating that the updating is in progress). The process then proceeds to Step S81 (cf. FIG. 15).

Details of the modification applicability determination process will be now described.

FIG. 11 is a flowchart illustrating a procedure of the modification applicability determination process. In the following, the process illustrated in FIG. 11 will be explained in order of step number.

Step S41: The modification application controller 140 acquires software names and version numbers from the individual modification data 61 to 64 in the modification data group 60. In the example illustrated in FIG. 11, the software name "AAA" and the version number "1.0.1" are acquired from the modification data 61 in the modification data group 60. Likewise, the software name "BBB" and the version number "2.0.0" are acquired from the modification data 62, the software name "CCC" and the version number "1.0.1" are acquired from the modification data 63, and the software name "ZZZ" and the version number "2.2.0" are acquired from the modification data 64.

Step S42: The modification application controller 140 acquires the software IDs of the target software to be modified, from the software name management database 120. Specifically, the modification application controller 140 searches the software name management database 120 by the software names acquired from the modification data group 60, and retrieves the software IDs corresponding to the software names. In the example illustrated in FIG. 11, "1", "2", "3" and "5" are acquired as the software IDs assigned to the software names "AAA", "BBB", "CCC" and "ZZZ", respectively.

Step S43: The modification application controller 140 selects one of the nodes constituting the cluster system 30. Specifically, the modification application controller 140 selects the node number successively from top downward, among the node numbers registered in the modification application management database 130.

Step S44: The modification application controller 140 acquires the software version management table corresponding to the selected node from the modification application management database 130. In the example illustrated in FIG. 11, the software version management table 132 is acquired in which the software version numbers corresponding to the software IDs "1", "2" and "5" are registered.

Step S45: The modification application controller 140 selects one piece of software as target software to be modified. Specifically, the modification application controller 140 selects one of the software names acquired from the modification data group 60.

Step S46: The modification application controller 140 looks up the table acquired in Step S44 and determines whether or not the target software to be modified is installed on the node selected in Step S43. Specifically, the modification application controller 140 searches the software version management table, acquired in Step S44, for the software ID of the selected software.

If the target software to be modified is installed, the process proceeds to Step S47. If the target software is not installed, the process proceeds to Step S50.

In the example of FIG. 11, the pieces of software with the software IDs "1", "2" and "5", among the multiple pieces of software to be modified, are installed on the selected node, but the software with the software ID "3" is not installed. Thus, for the pieces of software with the software IDs "1", "2" and "5", the process proceeds to Step S47, and for the software with the ID "3", the process proceeds to Step S50.

Step S47: The modification application controller 140 determines whether or not the version of the modification data is later than that of the installed software. The version number of the installed software is identified from the software version management table acquired in Step S44. The version number of the modification data is identified by looking up the version number associated with the corresponding software name acquired in Step S41.

If the version of the modification data is later, the process proceeds to Step S48. If the versions are the same or the version of the installed software is later, the process proceeds to Step S49.

Step S48: The modification application controller 140 sets "update" for the operation flag associated with the target software in the software version management table acquired in Step S44. Also, the modification application controller 140 sets "not-yet" for the status flag associated with the target software in the software version management table acquired in Step S44. The process then proceeds to Step S50.

Step S49: The modification application controller 140 sets "unalterable" for the operation flag associated with the target software in the software version management table acquired in Step S44. Also, the modification application controller 140 sets "not-yet" for the status flag associated with the target software in the software version management table acquired in Step S44.

Step S50: The modification application controller 140 determines whether or not there is other software to be modified. Specifically, the modification application controller 140 determines whether there is a piece of software with respect to which Steps S46 to S49 have not yet been executed, among the pieces of software with the software names acquired from the modification data group 60. If there is a piece or pieces of software to be modified, the process proceeds to Step S45. If the modification applicability has been checked with respect to all pieces of software to be modified, the process proceeds to Step S51.

Step S51: The modification application controller 140 determines whether or not there is a node or nodes to be checked. Specifically, the modification application controller 140 determines whether there is a node with respect to which Steps S44 through S50 have not yet been executed, among the nodes constituting the cluster system 30. Where the node name is successively selected from top downward in the modification application management database 130 and if the last node name is already selected, then it means that the modification applicability has been checked with respect to all nodes. If there is a node or nodes to be checked, the process proceeds to Step S43, and if there is no node to be checked, the modification applicability determination process ends.

Details of the modification applicable node selection and notification process will be now described.

FIG. 12 is a flowchart illustrating a procedure of the modification applicable node selection and notification process. In the following, the process illustrated in FIG. 12 will be explained in order of step number.

Step 561: The job executable node manager 112 selects one unchecked node from the application scheduled node list. Specifically, the job executable node manager 112h successively selects the node ID from top downward, among the node IDs indicated on the application scheduled node list.

Step S62: The job executable node manager 112 determines whether or not the selected node is currently free from job. Specifically, the job executable node manager 112 acquires the current job execution status of the individual nodes from the job execution status manager 111, and determines whether or not a job is being executed by the selected node. If no job is being executed, the process proceeds to Step S64. If a job is under execution, the process proceeds to Step S63.

Step S63: The job executable node manager 112 determines whether or not there is an unchecked application scheduled node in the application scheduled node list. If an unchecked application scheduled node exists, the process proceeds to Step S61; if there is no unchecked application scheduled node, the process proceeds to Step S67.

Step S64: The job executable node manager 112 excludes the node selected in Step S61 from the serviceable node group and sets the selected node as a modification applicable node. Specifically, the job executable node manager 112 instructs the job execution controller of the node selected in Step S61 to stop its job execution service. Thereupon, the job execution controller in the node notifies the job execution status manager 111 in the management node 100 that the job execution instruction is not acceptable. Thus, the job execution status manager 111 deletes the node ID of that node from the list of the serviceable node group of the cluster system 30. The result of updating of the serviceable node group list is notified from the job execution status manager 111 to the job executable node manager 112. On receiving the notification, the job executable node manager 112 confirms that the exclusion of the node selected in Step S61 from the serviceable node group has been completed.

Step S65: The job executable node manager 112 adds "1" to (increments) the value of the modification-in-progress node counter 113b.

Step S66: The job executable node manager 112 determines whether or not the value of the modification-in-progress node counter 113b has reached the preset upper limit value. If the upper limit value is reached, the process proceeds to Step S67, and if the upper limit value is not reached yet, the process proceeds to Step S61.

Step S67: The job executable node manager 112 sends a list of the applicable nodes to the modification application controller 140.

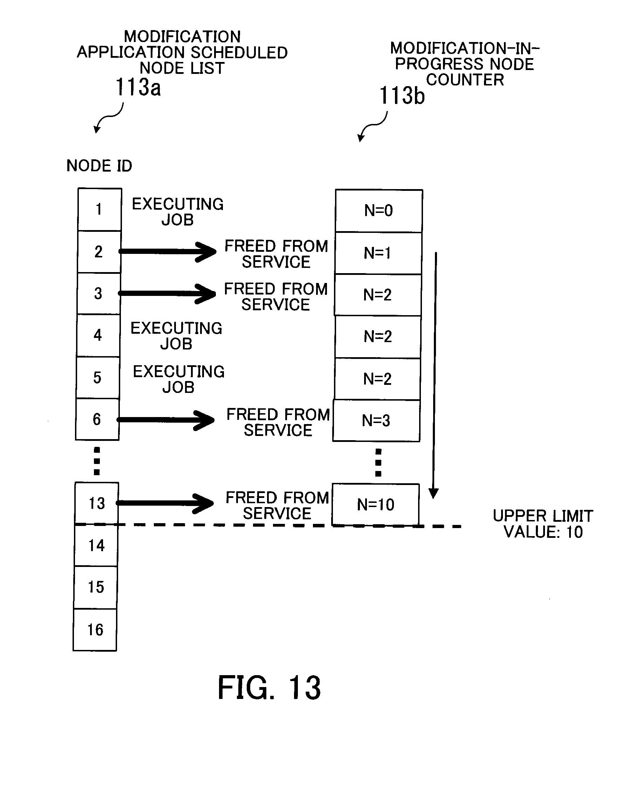

FIG. 13 illustrates the manner of how the modification applicable nodes are selected. The left part of the figure indicates the node IDs registered in the modification application scheduled node list 113a. The node ID is selected successively from top downward in the modification application scheduled node list 113a, and it is determined whether or not the modification can be applied to the selected node. In the illustrated example, only the nodes with the node IDs "1", "4" and "5" are executing a job, while the other nodes are in an idle state (not executing a job). The right part of the figure indicates changes in the value (N: N is an integer equal to or greater than "0") of the modification-in-progress node counter 113b. The upper limit value for the number of nodes to which the modification is concurrently applied is "10".

In the illustrated example, the nodes with the node IDs "2", "3", "6", ... are selected in the mentioned order as the modification applicable nodes, and the selected nodes are excluded from the serviceable node group. At the time the node with the node ID "13" is selected as the modification applicable node, the value of the modification-in-progress node counter 113b reaches "10".

Thus, the modification application to the node with the node ID "14" and the succeeding nodes is postponed until the modification application to any of the modification applicable nodes is completed.

As stated above, the modification application process is performed on a number of nodes equal to or smaller than the preset upper limit value, so that the modification application agents of these nodes individually execute the modification application process by using the modification data. Nodes which have completed the modification application process are successively incorporated into the serviceable node group.

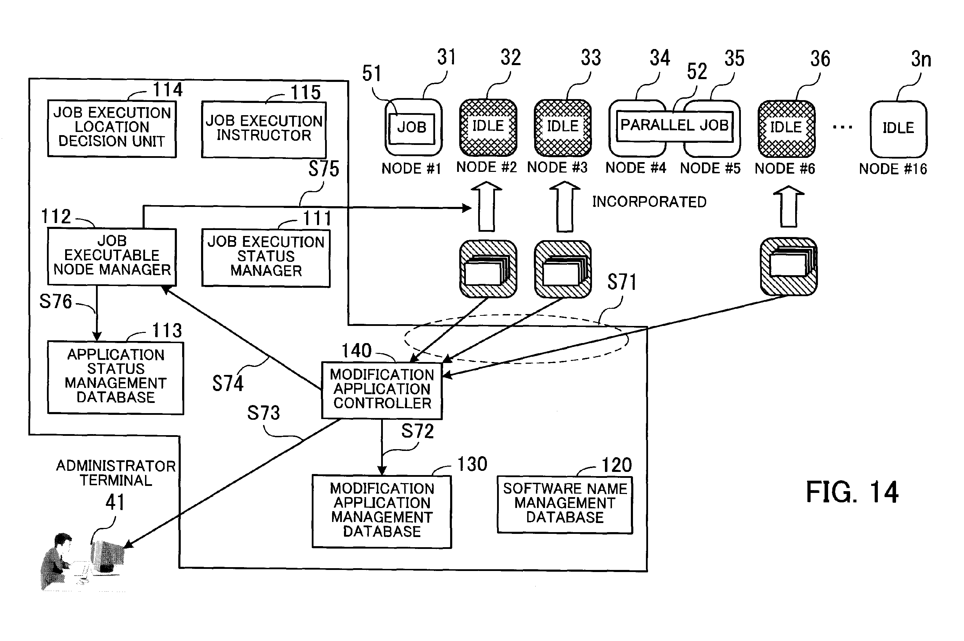

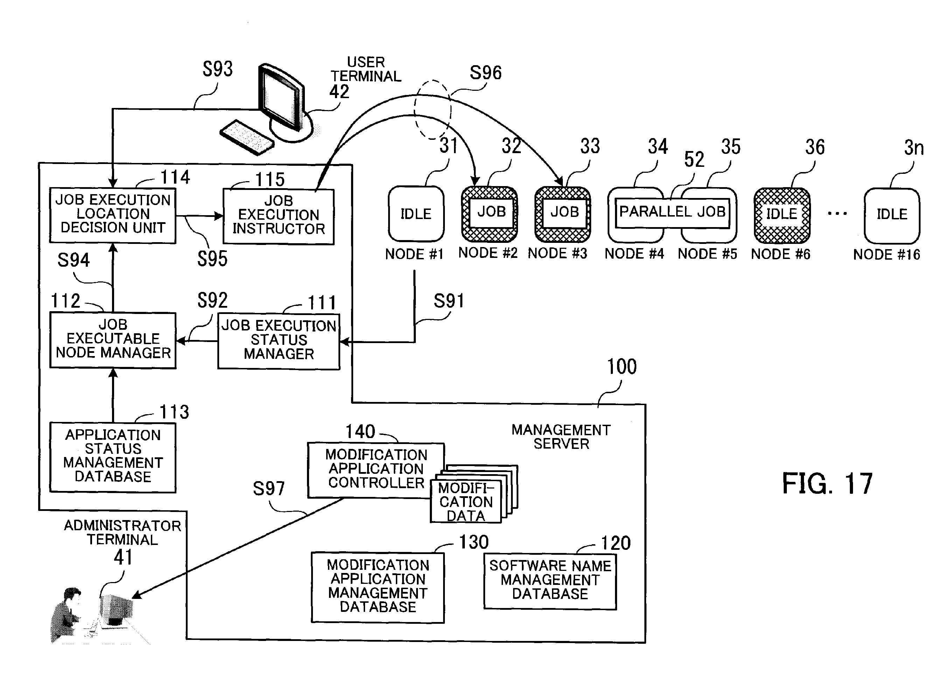

FIG. 14 illustrates an incorporation process following the modification application. In FIG. 14, the nodes to which the modification has been applied are indicated by crosshatching (this applies to FIGS. 17, 18 and 20 as well).

The modification application agents of the modification-applied nodes 32, 33 and 36 individually notify the management server 100 of the completion of the modification application (Step S71). This modification application completion notification is received by the modification application controller 140 of the management server 100. The modification application controller 140 updates the information stored in the modification application management database 130 and related with the nodes from which the modification application completion notification has been received (Step S72). Using the administrator terminal 41, the administrator can look up the contents of the modification application management database 130 via the modification application controller 140, whereby the progress of the modification application process can be monitored (Step S73).

When the modification application completion notification is received from all of the modification-in-progress nodes, the modification application controller 140 sends modification-applied node information indicating the modification-in-progress node group to the job executable node manager 112 (Step S74). The modification-applied node information includes a list of modification-applied nodes (set of node IDs with respect to which the modification application has been completed).

On receiving the modification-applied node information, the job executable node manager 112 incorporates the modification-applied nodes into the serviceable node group (Step S75). Specifically, the job executable node manager 112 instructs the job execution controllers of the individual modification-applied nodes to start to accept the job execution instruction. On receiving the instruction, the individual job execution controllers switch to a state waiting for the input of a job execution instruction from the job execution instructor 115. The job execution status manager 111 of the management node 100 is notified that the job execution controllers have begun to accept the job execution instruction. Accordingly, the job execution status manager 111 thereafter monitors the job execution status of the newly incorporated nodes.

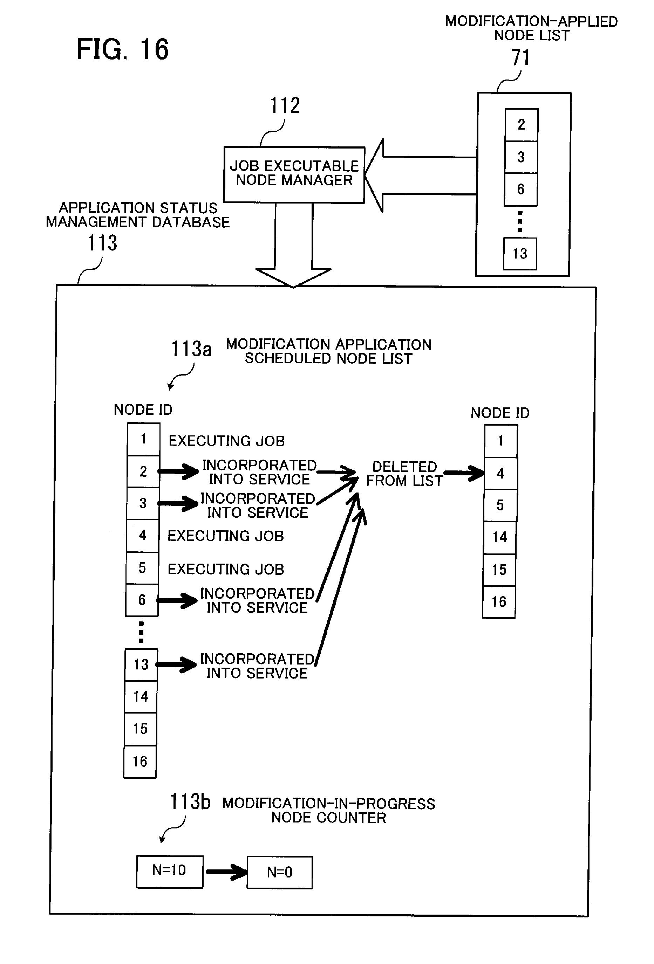

Further, the job executable node manager 112 updates the data of the application status management database 113 (Step S76). Details of this process will be explained later (cf. FIG. 16).

FIG. 15 is a flowchart illustrating the incorporation process following the modification application. In the following, the process illustrated in FIG. 15 will be explained in order of step number.

Step S81: The modification application controller 140 waits for the arrival of the modification application completion notification from the individual nodes.

Step S82: The modification application controller 140 receives the modification application completion notification from one of the modification-in-progress nodes.

Step S83: The modification application controller 140 updates the software version management table of the node from which the modification application completion notification has been received. Specifically, the modification application controller 140 sets "done" (indicating completion of the modification application) for the status flag in the record associated with the operation flag "update" in the software version management table. Also, the modification application controller 140 updates the version number in the record associated with the thus-changed status flag "done" to the version number of the modification-applied version.

Step S84: The modification application controller 140 determines whether or not the modification application has been completed for all of the modification-in-progress nodes. Specifically, if none of the software version management tables in the modification application management database 130 include the status flag "ongoing" indicating that the modification application is in progress, it is judged that the modification application has been completed with respect to all of the modification-in-progress nodes. If the modification application is completed, the process proceeds to Step S85, and if there is a modification-in-progress node or nodes, the process proceeds to Step S81.

Where a modification-in-progress node or nodes exist, the administrator can monitor the modification application process by looking up the software version management tables with the use of the administrator terminal 41.

Step S85: The modification application controller 140 sends the modification-applied node information including a list of the modification-applied nodes to the job executable node manager 112.

Step S86: The job executable node manager 112 incorporates the modification-applied nodes into the serviceable node group.

Step S87: The job executable node manager 112 updates the application status management database 113.

FIG. 16 illustrates the manner of how the application status management database is updated when nodes are incorporated. When the list 71 of the modification-applied nodes is received, the job executable node manager 112 incorporates, into the serviceable node group, the nodes with the node IDs included in the modification-applied node list. Subsequently, the job executable node manager 112 updates the modification application scheduled node list 113a and modification-in-progress node counter 113b in the application status management database 113.

Specifically, the node IDs of the nodes which have been incorporated into the serviceable node group are deleted from the modification application scheduled node list 113a. In the example illustrated in FIG. 16, the node IDs "2", "3" and "6" through "13" are deleted, with the result that the node IDs "1", "4", "5", "14", "15" and "16" remain on the modification application scheduled node list 113a. The value N of the modification-in-progress node counter 113b is reset to "0".

On completion of the modification application to all of the modification applicable nodes selected in the first round, selection of the modification applicable nodes for the second round is carried out. The aforementioned process is repeated thereafter until all node IDs in the modification application scheduled node list 113a are deleted.

After being incorporated, the modification-applied nodes can be used to execute a job.

FIG. 17 illustrates a job submission process executed while the modification application process is continued. In the example illustrated in FIG. 17, it is assumed that the node 31 has finished executing a job. When the job is finished, the node 31 notifies the management server 100 of the completion of the job (Step S91). Thereupon, the job execution status manager 111 recognizes that the node 31 has become idle. The job execution status manager 111 then sends information about the idle nodes to the job executable node manager 112.

If, at this time, a job execution request is input from the user terminal 42 (Step S93), the job execution location decision unit 114 acquires the information about the idle nodes from the job executable node manager 112 (Step S94). In this case, the job execution location decision unit 114 also acquires the modification application scheduled node list 113a via the job executable node manager 112.

Subsequently, the job execution location decision unit 114 selects a node or nodes that are to execute the job. In this case, the job execution location decision unit 114 preferentially selects nodes other than the modification application scheduled nodes. Specifically, by looking up the modification application scheduled node list 113a, the job execution location decision unit 114 can identify unmodified nodes. Thus, the job execution location decision unit 114 preferentially selects nodes other than the unmodified nodes and causes the selected nodes to execute the job. In the example of FIG. 17, if execution of two jobs each executable by a single node has been requested, the nodes 32 and 33, for example, are selected.

The node IDs of the nodes selected as the job execution location are sent to the job execution instructor 115 (Step S95), whereupon the job execution instructor 115 instructs the specified nodes to execute the respective jobs (Step S96), so that the job execution controllers of the instructed nodes execute the respective jobs. In the example of FIG. 17, the jobs are executed by the respective nodes 32 and 33.

Also while jobs are submitted, executed, and completed in this manner, the administrator can acquire the contents of the modification application management database 130 via the modification application controller 140 with the use of the administrator terminal 41, to monitor the modification application status (Step S97).

The following describes the modification application process for a new node group, performed after the modification application to the first selected node group is completed.

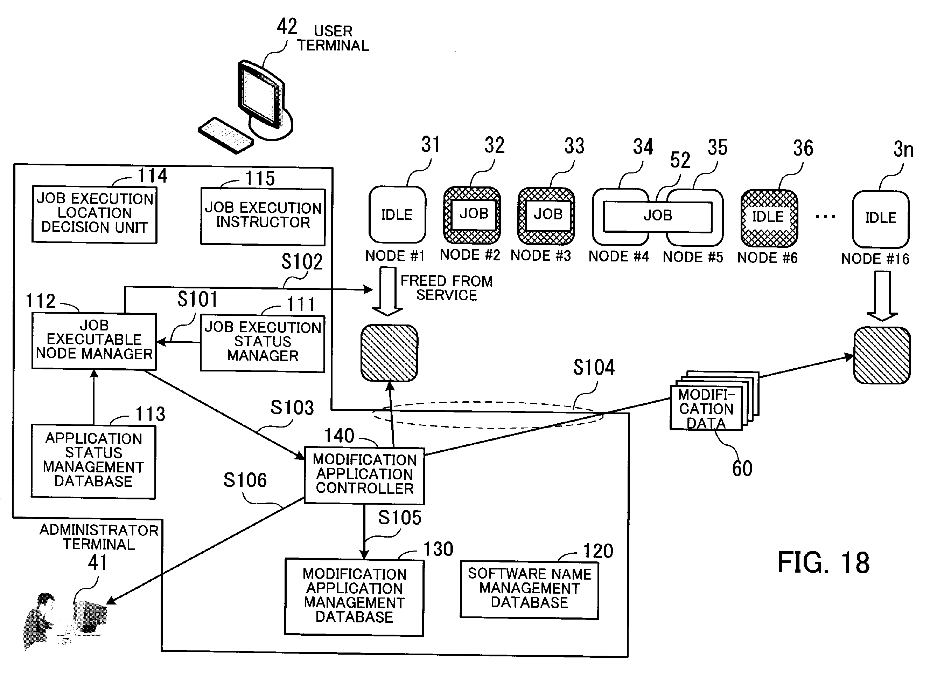

FIG. 18 illustrates the manner of how the modification application process is executed the second and subsequent times. The job executable node manager 112 looks up the modification application scheduled node list 113a in the application status management database 113 to identify unapplied nodes to which the modification is not applied yet, and acquires the job execution status of the unapplied nodes from the job execution status manager 111 (Step S101). In the illustrated example, the nodes 31 and 3n are idle while the nodes 34 and 35 are still executing a parallel job 52. Accordingly, the job executable node manager 112 excludes the idle nodes 31 and 3n from the serviceable node group (Step S102).

Then, the job executable node manager 112 notifies the modification application controller 140 of the node IDs of the nodes of which the service has been stopped (Step S103). The modification application controller 140 sends the modification data group 60 to the out-of-service nodes 31 and 3n and instructs these nodes to execute the modification application process (Step S104). Also, the modification application controller 140 accesses the software version management tables stored in the modification application management database 130 and corresponding to the nodes performing the modification application process, and sets "ongoing" (indicating that the modification application is in progress) for the status flags associated with the target software being modified (Step S105).

Also while the modification application process is executed the second and succeeding times, the administrator can acquire the contents of the modification application management database 130 via the modification application controller 140 with the use of the administrator terminal 41, to monitor the modification application status (Step S106).

In the situation where the modification application is completed for only part of nodes, the modification application process is carried out following the same procedure as illustrated in FIG. 12. Specifically, the job executable node manager 112 successively selects non-executing nodes from top downward in the modification application scheduled node list 113a, and sets the selected nodes as the modification applicable nodes. Each time a modification applicable node is added, the job executable node manager 112 adds "1" to the modification-in-progress node counter 113b. This process is executed until the value of the modification-in-progress node counter 113b reaches the predetermined upper limit value or the modification applicability is checked up to the last node in the modification application scheduled node list 113a.

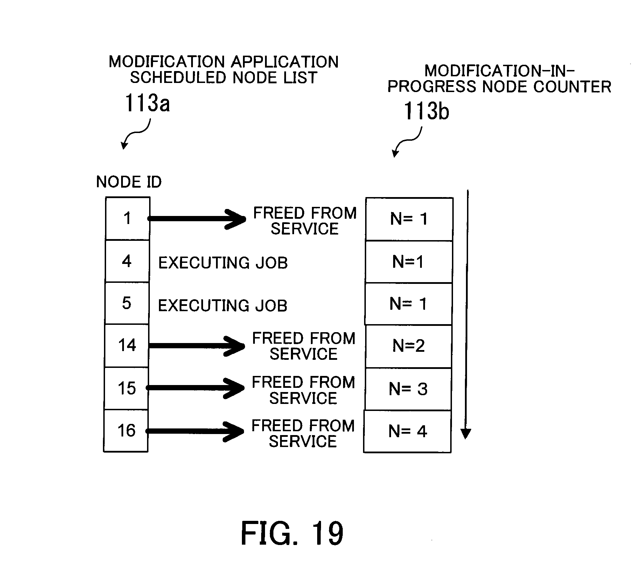

FIG. 19 illustrates the manner of how the modification applicable nodes are selected the second time. In the example illustrated in FIG. 19, the nodes with the node IDs "1", "14", "15" and "16" are selected as the modification applicable nodes and are excluded from the serviceable node group. Consequently, the value of the modification-in-progress node counter 113b is "4". The upper limit value "10" is not reached yet, but since the modification applicability has been checked up to the last node (node ID "16") in the modification application scheduled node list, the applicable node selection process ends. Thus, as a result of the modification applicable node selection for the second round, four nodes are selected.

As stated above, the software installed on the individual nodes can be modified while continuing the service of the cluster system 30.

In the foregoing, explanation is made of an exemplary case where a job executable by a single node is submitted during the modification application process. In some cases, however, a parallel job is submitted. In the case of executing a parallel job, multiple nodes which are to execute the job generally need to have identical hardware and software resources. Thus, a parallel job needs to be executed either by unapplied nodes to which the modification is not applied yet, or by modification-applied nodes.

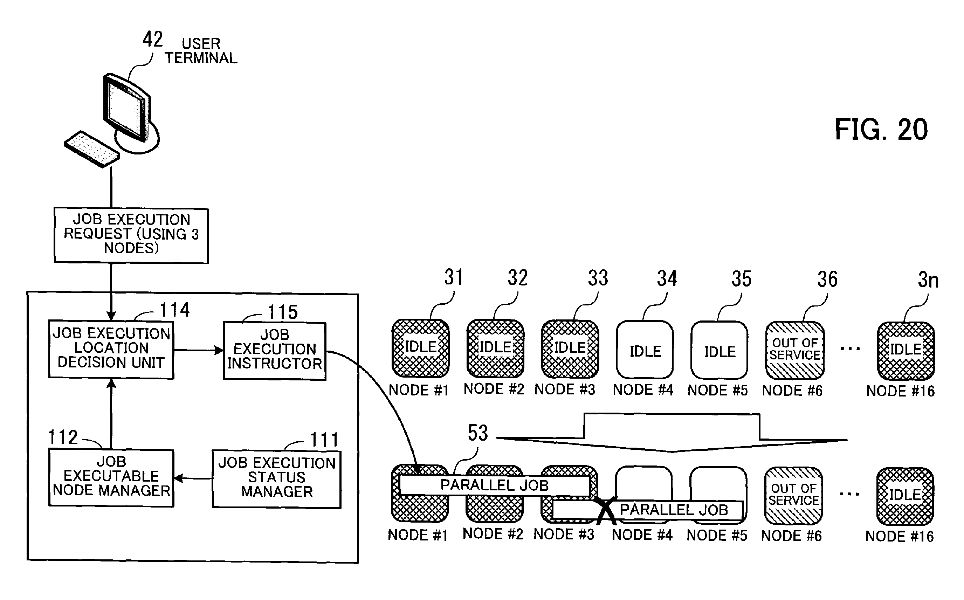

FIG. 20 illustrates the manner of how a parallel job is allocated. In the illustrated example, it is assumed that the execution of a parallel job to be executed by three nodes is requested in a situation where modification-applied nodes and unapplied nodes coexist. In the example of FIG. 20, the nodes 31 to 35 and 3n are idle, but the software modification is not yet applied to the nodes 34 and 35. It is not possible to use both modification-applied and unapplied nodes at the same time for executing the job.

On receiving the job execution request, the job execution location decision unit 114 acquires the modification application scheduled node list 113a from the job executable node manager 112 and recognizes that the software modification is not yet applied to the nodes 34 and 35. Also, the job execution location decision unit 114 acquires the node numbers of the idle nodes from the job executable node manager 112. The job execution location decision unit 114 then determines whether or not there are three or more idle nodes to which the software modification has been applied. If there are three or more modification-applied idle nodes, the job execution location decision unit 114 selects three nodes out of the identified nodes, and sets the selected nodes as the job execution location.

If there are two or less modification-applied idle nodes, the job execution location decision unit 114 determines whether or not there are three or more modification-unapplied idle nodes. If there are three or more modification-unapplied idle nodes, the job execution location decision unit 114 selects three nodes, out of the identified nodes, and sets the selected nodes as the job execution location. If there remains two or less modification-unapplied idle nodes, the job execution request is put in a wait state.

In the example illustrated in FIG. 20, a parallel job 53 is executed by the modification-applied nodes 31 to 33. In the case of the other combinations of idle nodes (e.g., nodes 33 to 35), modification-applied and unapplied nodes are mixed, and thus, the parallel job cannot be executed by such combinations.

In this manner, even in cases where a parallel job is submitted during the modification application process, the job can be executed at all times by parallel processing of nodes having identical software resources.

In the foregoing example, the selection of next modification applicable nodes is postponed until the modification application to all selected applicable nodes belonging to the same group is completed. Alternatively, each time the modification application to one modification applicable node is completed, an additional modification applicable node may be selected. Namely, when the modification application to even a single node is completed, the modification application to a new node may be initiated, without waiting for the completion of the modification application to all modification applicable nodes.

In this case, each time the modification application completion notification is received from a node, the modification application controller 140 sends the modification-applied node information including the node ID of this node to the job executable node manager 112. On receiving the modification-applied node information, the job executable node manager 112 deletes the corresponding node ID from the modification application scheduled node list 113a and also decrements the value of the modification-in-progress node counter 113b. Also, the job executable node manager 112 incorporates the node with the node ID included in the modification-applied node information into the serviceable node group. Subsequently, the job executable node manager 112 executes the modification applicable node selection process following the same procedure as illustrated in FIG. 12.

In general, however, the cluster system 30 is constituted by nodes with identical hardware specifications, and thus the modification application to the individual nodes requires almost the same time. It is therefore thought that, for a group of nodes with respect to which the modification application is started at the same time, the updating of the nodes will be completed almost at the same time. If the modification application to a group of nodes is finished at the same time, then the necessity for sequentially incorporating the modification-applied nodes is low. In this embodiment, therefore, the modification application process for the remaining nodes is postponed until the modification application to all nodes belonging to the previously selected group is completed.

The processing functions described above can be implemented by a computer. In this case, a program is prepared in which is described the process for performing the functions of the management server or a node constituting the cluster system 30. The program is executed by a computer, whereupon the aforementioned processing functions are accomplished by the computer. The program describing the process may be recorded on computer-readable recording media. As such computer-readable recording media, magnetic recording devices, optical discs, magneto-optical recording media, semiconductor memories, etc. may be used. Magnetic recording devices include, for example, a hard disk drive (HDD), a flexible disk (FD), a magnetic tape, etc. Optical discs include a DVD (Digital Versatile Disc), a DVD-RAM, a CD-ROM (Compact Disc Read Only Memory), a CD-R (Recordable)/RW (ReWritable), etc. Magneto-optical recording media include an MO (Magneto-Optical disk) etc.

To market the program, portable recording media, such as DVDs and CD-ROMs, on which the program is recorded may be put on sale. Alternatively, the program may be stored in the storage device of a server computer and may be transferred from the server computer to other computers via a network.

A computer which is to execute the program stores in its storage device the program read from a portable recording medium or transferred from the server computer, for example. Then, the computer loads the program from its storage device and executes the process in accordance with the program. The computer may load the program directly from the portable recording medium to perform the process in accordance with the program. Also, as the program is transferred from the server computer, the computer may sequentially execute the process in accordance with the received program.

The present invention is not limited to the foregoing embodiment alone and may be modified in various ways without departing from the spirit of the invention.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Explanation of Reference Numerals

1: software modification management apparatus
1a: modification application management database
1b: modification application scheduled node decision means
1c: modification application scheduled node list
1d: job execution status management means
1e: modification applicable node selection means
1f: modification-in-progress node counter
1g: service management means
1h: modification means
2: cluster system
3: modification data

## Claims

1. A software modification management program for managing modification application to software installed on a plurality of nodes constituting a cluster system,
wherein the software modification management program causes a computer to function as:
a modification application management database having registered therein identification information and version numbers of the software installed on the respective nodes in such a manner that registered items are associated with node IDs of the corresponding nodes;
modification application scheduled node decision means operative in response to input of modification data including identification information and version number of target software to be modified and a modification program, to search the modification application management database by the input identification information and version number of the target software, extract node IDs of modification application scheduled nodes on which an older version of the target software is installed, and generate a modification application scheduled node list including the extracted node IDs;
job execution status management means configured to manage information indicating whether the individual nodes are executing a job or not;
modification applicable node selection means configured to acquire, from the job execution status management means, the node IDs of non-executing nodes which are not executing a job, successively extract the node IDs of the non-executing nodes from the modification application scheduled node list to set the extracted node IDs as modification applicable node IDs until a value of a modification-in-progress node counter indicating a number of modification-in-progress nodes to which software modification is being applied reaches a predetermined upper limit value, and increment the value of the modification-in-progress node counter each time a node ID is extracted from the modification application scheduled node list, wherein, when the modification application to modification applicable nodes corresponding to the modification applicable node IDs is completed, the modification applicable node selection means deletes the node IDs of modification-applied nodes with respect to which the modification application is completed, from the modification application scheduled node list, and subtracts a number of the modification-applied nodes from the value of the modification-in-progress node counter;
service management means configured to stop service of the modification applicable nodes corresponding to the modification applicable node IDs and, on receiving the node IDs of the modification-applied nodes, start the service of the nodes corresponding to the received node IDs; and
modification means configured to modify the target software installed on the modification applicable nodes of which the service has been stopped, in accordance with the modification data, and notify the modification applicable node selection means and the service management means of the node IDs of the modification-applied nodes.

2. The software modification management program according to claim 1, wherein the computer is caused to function further as:
job execution location decision means operative in response to input of a request for execution of a job, to acquire the modification application scheduled node list from the modification applicable node selection means and preferentially select a node other than the modification application scheduled nodes; and
job execution instruction means configured to cause the node selected by the job execution location decision means to execute the job.

3. The software modification management program according to claim 2, wherein, when input with a parallel job execution request for execution of a parallel job which is to be executed cooperatively by a plurality of nodes, the job execution location decision means selects a node group including a number of nodes which are necessary to execute the parallel job and all of which are left out of or included in the modification application scheduled node list.

4. The software modification management program according to claim 1, wherein the modification application unit updates the version number of the software associated with the node ID which is stored in the modification application management database and which corresponds to the modification-applied node with respect to which the modification application is completed, to a version number of a modification-applied version.

5. The software modification management program according to claim 1, wherein:
the modification application scheduled node decision means sets a modification not-yet status for a status flag which indicates a status of the modification application and which is associated with each of the node IDs of the modification application scheduled nodes stored in the modification application management database,
the modification application means sets a modification ongoing status for the status flag associated with each of the node IDs of nodes with respect to which the modification application has been started, and sets a modification done status for the status flag associated with each of the node IDs of the modification-applied nodes, and
the computer is caused to function further as modification status provision means operative in response to a request from an administrator terminal to provide contents of the modification application management database.

6. A software modification management apparatus for managing modification application to software installed on a plurality of nodes constituting a cluster system, comprising:
a modification application management database having registered therein identification information and version numbers of the software installed on the respective nodes in such a manner that registered items are associated with node IDs of the corresponding nodes;
modification application scheduled node decision means operative in response to input of modification data including identification information and version number of target software to be modified and a modification program, to search the modification application management database by the input identification information and version number of the target software, extract node IDs of modification application scheduled nodes on which an older version of the target software is installed, and generate a modification application scheduled node list including the extracted node IDs;
job execution status management means configured to manage information indicating whether the individual nodes are executing a job or not;
modification applicable node selection means configured to acquire, from the job execution status management means, the node IDs of non-executing nodes which are not executing a job, successively extract the node IDs of the non-executing nodes from the modification application scheduled node list to set the extracted node IDs as modification applicable node IDs until a value of a modification-in-progress node counter indicating a number of modification-in-progress nodes to which software modification is being applied reaches a predetermined upper limit value, and increment the value of the modification-in-progress node counter each time a node ID is extracted from the modification application scheduled node list, wherein, when the modification application to modification applicable nodes corresponding to the modification applicable node IDs is completed, the modification applicable node selection means deletes the node IDs of modification-applied nodes with respect to which the modification application is completed, from the modification application scheduled node list, and subtracts a number of the modification-applied nodes from the value of the modification-in-progress node counter;
service management means configured to stop service of the modification applicable nodes corresponding to the modification applicable node IDs and, on receiving the node IDs of the modification-applied nodes, start the service of the nodes corresponding to the received node IDs; and
modification means configured to modify the target software installed on the modification applicable nodes of which the service has been stopped, in accordance with the modification data, and notify the modification applicable node selection means and the service management means of the node IDs of the modification-applied nodes.

7. The software modification management apparatus according to claim 6, further comprising:
job execution location decision means operative in response to input of a request for execution of a job, to acquire the modification application scheduled node list from the modification applicable node selection means and preferentially select a node other than the modification application scheduled nodes; and
job execution instruction means configured to cause the node selected by the job execution location decision means to execute the job.

8. The software modification management apparatus according to claim 7, wherein, when input with a parallel job execution request for execution of a parallel job which is to be executed cooperatively by a plurality of nodes, the job execution location decision means selects a node group including a number of nodes which are necessary to execute the parallel job and all of which are left out of or included in the modification application scheduled node list.

9. The software modification management apparatus according to claim 6, wherein the modification application means updates the version number of the software associated with the node ID which is stored in the modification application management database and which corresponds to the modification-applied node with respect to which the modification application is completed, to a version number of a modification-applied version.

10. The software modification management apparatus according to claim 6, wherein:
the modification application scheduled node decision means sets a modification not-yet status for a status flag which indicates a status of the modification application and which is associated with each of the node IDs of the modification application scheduled nodes stored in the modification application management database,
the modification application means sets a modification ongoing status for the status flag associated with each of the node IDs of nodes with respect to which the modification application has been started, and sets a modification done status for the status flag associated with each of the node IDs of the modification-applied nodes, and
the software modification management apparatus further comprises modification status provision means operative in response to a request from an administrator terminal to provide contents of the modification application management database.

11. A software modification management method for managing modification application to software installed on a plurality of nodes constituting a cluster system, comprising:
causing modification application scheduled node decision means, in response to input of modification data including identification information and version number of target software to be modified and a modification program, to search a modification application management database having registered therein identification information and version numbers of the software installed on the respective nodes in such a manner that registered items are associated with node IDs of the corresponding nodes, by using the input identification information and version number of the target software, extract node IDs of modification application scheduled nodes on which an older version of the target software is installed, and generate a modification application scheduled node list including the extracted node IDs;
causing job execution status management means to manage information indicating whether the individual nodes are executing a job or not;
causing modification applicable node selection means to acquire, from the job execution status management means, the node IDs of non-executing nodes which are not executing a job, successively extract the node IDs of the non-executing nodes from the modification application scheduled node list to set the extracted node IDs as modification applicable node IDs until a value of a modification-in-progress node counter indicating a number of modification-in-progress nodes to which software modification is being applied reaches a predetermined upper limit value, and increment the value of the modification-in-progress node counter each time a node ID is extracted from the modification application scheduled node list;
causing service management means to stop service of modification applicable nodes corresponding to the modification applicable node IDs;
causing modification means to modify the target software installed on the modification applicable nodes of which the service has been stopped, in accordance with the modification data, and notify the modification applicable node selection means and the service management means of the node IDs of modification-applied nodes with respect to which the modification application is completed;
causing the modification applicable node selection means, when the modification application to the modification applicable nodes corresponding to the modification applicable node IDs is completed, to delete the node IDs of the modification-applied nodes from the modification application scheduled node list, and subtract a number of the modification-applied nodes from the value of the modification-in-progress node counter; and
causing the service management means, on receipt of the node IDs of the modification-applied nodes, to start the service of the nodes corresponding to the received node IDs.

12. The software modification management method according to claim 11, further comprising:
causing job execution location decision means, when input with a request for execution of a job, to acquire the modification application scheduled node list from the modification applicable node selection means, and preferentially select a node other than the modification application scheduled nodes; and
causing job execution instruction means to instruct the node selected by the job execution location decision means to execute the job.

13. The software modification management method according to claim 12, wherein, when input with a parallel job execution request for execution of a parallel job which is to be executed cooperatively by a plurality of nodes, the job execution location decision means selects a node group including a number of nodes which are necessary to execute the parallel job and all of which are left out of or included in the modification application scheduled node list.

14. The software modification management method according to claim 11, wherein the modification application means updates the version number of the software associated with the node ID which is stored in the modification application management database and which corresponds to the modification-applied node with respect to which the modification application is completed, to a version number of a modification-applied version.

15. The software modification management method according to claim 11, wherein:
the modification application scheduled node decision means sets a modification not-yet status for a status flag which indicates a status of the modification application and which is associated with each of the node IDs of the modification application scheduled nodes stored in the modification application management database,
the modification application means sets a modification ongoing status for the status flag associated with each of the node IDs of nodes with respect to which the modification application has been started, and sets a modification done status for the status flag associated with each of the node IDs of the modification-applied nodes, and
the software modification management method further comprises causing modification status provision means, in response to a request from an administrator terminal, to provide contents of the modification application management database.
